# EUROPÄISCHE PATENTSCHRIFT

(11) **EP 2 386 456 B1**
(45) Veröffentlichungstag und Bekanntmachung des Hinweises auf die Patenterteilung: **19.02.2014**
(21) Anmeldenummer: 11003788.4
(22) Anmeldetag: 09.05.2011
(51) Int. Cl.: B61K 9/10, G01N 27/90

(54) **Verfahren und Vorrichtung zur Prüfung von Schienen auf so genannte Riffel**
Method and device for testing rails for ripples
Procédé et dispositif de vérification de rails au niveau des cannelures

(30) Priorität: 14.05.2010 DE 102010020597
(43) Veröffentlichungstag der Anmeldung: 16.11.2011
(73) Patentinhaber: Eurailscout Inspection & Analysis b.v., 10243 Berlin (DE)
(72) Erfinder: Knape, Steffen, 48480 Lünne (DE)
(74) Vertreter: Manitz, Finsterwald & Partner GbR

(56) Entgegenhaltungen:
- DE-A1- 2 430 986
- FR-A1- 2 751 080
- US-A- 1 958 079
- US-A1- 2005 285 588

## Beschreibung

Die vorliegende Erfindung betrifft ein Verfahren und eine Vorrichtung zur Prüfung von Schienen, insbesondere Eisenbahnschienen, auf so genannte Riffel.

Riffelprüfverfahren und -vorrichtungen werden dazu verwendet, Unebenheiten in der Oberfläche von Schienen festzustellen. Solche Unebenheiten treten insbesondere auch in der Oberseite des Schienenkopfes auf und können, wenn sie nicht behandelt werden, zu so genannten Squats führen. Squats wiederum führen zu Rissen und irgendwann zu einer Zerstörung, insbesondere einem Bruch der Schiene.

Ein Verfahren gemäß dem Oberbegriff von Anspruch 1 ist aus FR 2 751 080 A1, US 2005/285588 A1 und US 1 958 079 A bekannt. Die DE 2430986 A1 betrifft einen Meßrahmen.

Der Erfindung liegt die Aufgabe zugrunde, bekannte Verfahren und Vorrichtungen zur Riffelmessung zu verbessern.

Diese Aufgabe wird bei einem Verfahren durch die Merkmale von Anspruch 1 gelöst.

Bei einer Vorrichtung wird die genannte Aufgabe durch die Merkmale von Anspruch 4 gelöst.

Bekannte Verfahren und Vorrichtungen zur Riffelmessung verwenden Laser zur Abstandsmessung zwischen der Prüfvorrichtung und der Oberfläche der Schiene. Diese Verfahren sind verhältnismäßig aufwendig und teuer. Das erfindungsgemäße Verfahren mit Verwendung einer Wirbelstromprüfung ist demgegenüber verhältnismäßig unaufwendig und zeichnet sich durch eine hohe erreichbare Genauigkeit aus.

Um eine besonders hohe Genauigkeit der Prüfung zu erreichen, sind bevorzugt mehrere längs einer Sehne angeordnete Erzeugerspulen und Sensoren vorgesehen. Die Sehne wird parallel zur Schiene angeordnet und längs der Schiene bewegt. Über die Sehne kann gewährleistet werden, dass eine exakte Pfeilhöhe unabhängig von der Relativposition der Messpunkte zur Schiene bestimmt werden kann.

Nach der Erfindung werden die sich aufgrund der Riffel ergebenden Abstandsänderungen zwischen der Erzeugerspule und der Schiene erfasst und ausgewertet. Die in der Schiene erzeugten Wirbelströme hängen vom Abstand der Erzeugerspule von der Schiene ab. Je größer der Abstand, desto kleiner sind die erzeugten Wirbelströme und dementsprechend die von diesen erzeugten magnetischen Gegenfelder. Bei dieser Art der Erfassung von Änderungen spricht man vom so genannten Lift-Off.

Bei dieser Erfassung von Riffeln in der Schiene ist es bevorzugt, wenn die Erzeugerspulen auf einem vorgegebenen Abstand zur Schiene, beispielsweise einem Abstand von ca. 1 mm, kalibriert werden. Dadurch können Abstandsänderungen hochgenau erfasst werden.

Bei einer erfindungsgemäßen Vorrichtung zur Durchführung des erfindungsgemäßen Verfahrens ist es besonders bevorzugt, wenn die Prüfeinrichtung starr mit mindestens einer Achse eines Schienenfahrzeugs verbunden und von der oder den Achsen getragen wird. Anders als bei Aufhängung der Prüfvorrichtung am Drehgestell oder Fahrzeugkasten, die gegenüber der Fahrzeugachse gefedert gelagert sind, ändert sich der Abstand der Achsen von der Schienenoberkante nicht. Dementsprechend ist auch der Abstand der Prüfvorrichtung von der Schienenoberkante fest, so dass keine Kompensation von Abstandsänderungen notwendig ist und dennoch hoch aussagekräftige Ergebnisse erreicht werden.

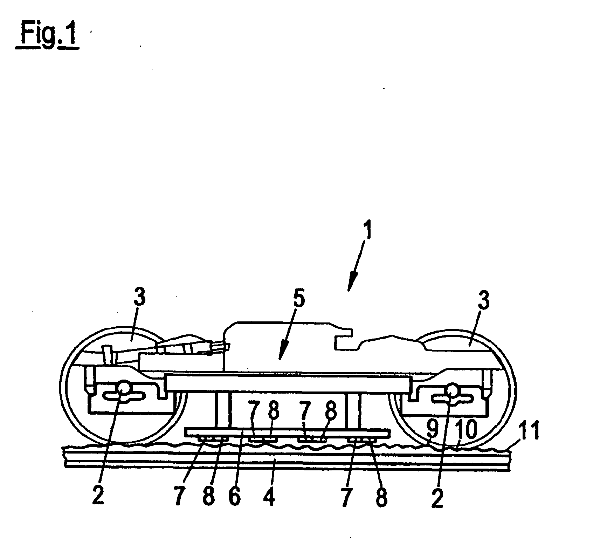

Ein Ausführungsbeispiel der Erfindung ist in der Zeichnung dargestellt und wird nachfolgend beschrieben. Es zeigt als einzige Figur in schematischer Darstellung
- Fig. 1: eine Seitenansicht einer erfindungsgemäßen Prüfvorrichtung an einem Drehgestell eines Schienenfahrzeugs.

Das in Fig. 1 dargestellte Drehgestell 1 ist an einem hier nicht dargestellten Schienenfahrzeug angeordnet. Es umfasst zwei Achsen 2, die jeweils zwei Räder 3 tragen, die auf zwei Schienen 4 eines Gleises abrollen.

Von den Achsen 2 des Drehgestells 1 wird die erfindungsgemäße Prüfvorrichtung 5 getragen, die an den Achsen 2 starr aufgehängt ist. Die Prüfvorrichtung 5 umfasst eine Sehne 6, auf welcher im dargestellten Ausführungsbeispiel vier Paare von Erzeugerspulen 7 und Sensoren 8 angeordnet sind. Die Erzeugerspulen 7 erzeugen in der Schiene 4 Wirbelströme, die ihrerseits ein magnetisches Wechselfeld erzeugen. Diese magnetischen Wechselfelder erzeugen wiederum in der Sensorspule 8 ein elektrisches Wechselfeld, welches detektiert und ausgewertet wird.

Für die Auswertung der Prüfergebnisse werden die aufgrund der Wellenberge 9 und Wellentäler 10 sich ändernden Abstände zwischen der Schienenoberkante 11 und der Prüfvorrichtung 5 erfasst. Es ergeben sich mit der erfindungsgemäßen Wirbelstromprüfung hochgenaue Ergebnisse.

### Bezugszeichenliste

- 1: Drehgestell
- 2: Achse
- 3: Rad
- 4: Schiene
- 5: Prüfvorrichtung
- 6: Sehne
- 7: Erzeugerspule
- 8: Sensorspule
- 9: Wellenberg
- 10: Wellental
- 11: Schienenoberkante

## Patentansprüche

1. Verfahren zur Prüfung von Schienen (4), insbesondere Eisenbahn schienen, auf so genannte Riffel (9, 10), wobei
eine Wirbelstromprüfung durchgeführt wird, indem eine Erzeugerspule (7) für ein magnetisches Wechselfeld und ein Sensor (8), insbesondere eine Sensorspule, zur Erfassung eines durch die Wirbelströme in der Schiene (4) erzeugten Magnetfelds in Längsrichtung über die Schiene (4) geführt werden und das Sensorsignal, insbesondere der in der Sensorspule (8) rückinduzierte Wechselstrom, ausgewertet wird, **dadurch gekennzeichnet,**
**dass** die sich aufgrund der Riffel (9, 10) ergebenden Abstandsänderungen zwischen den Erzeugerspulen (7) und der Schiene (4) erfasst und ausgewertet werden.

2. Verfahren nach Anspruch 1,
dadurch **gekenntzeichnet,**
dass mehrere längs einer Sehne (6) angeordnete Paare von Erzeugerspulen (7) und Sensoren (8) verwendet werden, indem die Sehne (6) parallel zur Schiene (4) angeordnet und längs der Schiene (4) bewegt wird.

3. Verfahren nach Anspruch 1 oder 2,
**dadurch gekennzeichnet ,**
**dass** die Erzeugerspulen (7) auf einen vorgegebenen Abstand zur Schiene (4), beispielsweise einem Abstand von ca. 1 mm kalibriert werden.

4. Vorrichtung zur Prüfung von Schienen (4), insbesondere Eisenbahnschienen, auf so genannte Riffel (9, 10), wobei
Mittel (7, 8) vorgesehen sind, durch welche eine Wirbelstromprüfung durchführbar ist, indem mindestens eine Erzeugerspule (7) für ein magnetisches Wechselfeld und mindestens ein Sensor (8), insbesondere eine Sensorspule, zur Erfassung eines durch die Wirbelströme in der Schiene (4) erzeugten Magnetfelds in Längsrichtung über die Schiene (4) geführt und das Sensorsignal, insbesondere der in der Sensorspule (8), rückinduzierte Wechselstrom, ausgewertet wird, **dadurch gekennzeichnet, dass** weiterhin Mittel vorgesehen sind, durch welche die sich aufgrund der Riffel (9, 10) ergebenden Abstandsänderungen zwischen den Erzeugerspulen (7) und der Schiene (4) erfassbar und auswertbar sind.

5. Vorrichtung nach Anspruch 4,
**dadurch gekennzeichnet,**
**dass** die Prüfvorrichtung (5) starr mit mindestens einer Achse (2) eines Schienenfahrzeugs verbunden und von der oder den Achsen (2) getragen wird.

## Claims

1. A method for testing rails (4), in particular railway rails, for so-called corrugations (9, 10), wherein
an eddy current test is carried out in that a generator coil (7) for an alternating magnetic field and a sensor (8), in particular a sensor coil, for detecting a magnetic field generated by the eddy currents in the rail (4) are led over the rail (4) in the longitudinal direction and the sensor signal, in particular the alternating current induced back in the sensor coil (8), is evaluated, **characterised in that** the distance changes between the generator coils (7) and the rail (4) arising due to the corrugations (9, 10) are detected and evaluated.

2. A method in accordance with claim 1,
**characterised in that**
a plurality of pairs of generator coils (7) and sensors (8) arranged along a chord (6) are used **in that** the chord (6) is arranged parallel to the rail (4) and is moved along the rail (4).

3. A method in accordance with claim 1 or claim 2,
**characterised in that**
the generator coils (7) are calibrated to a predefined distance from the rail (4), for example to a distance of approximately 1 mm.

4. An apparatus for testing rails (4), in particular railway rails, for so-called corrugations (9, 10), wherein
means (7, 8) are provided by which an eddy current test can be carried out in that at least one generator coil (7) for an alternating magnetic field and at least one sensor (8), in particular a sensor coil, for detecting a magnetic field generated by the eddy currents in the rail (4) are led over the rail (4) in the longitudinal direction and the sensor signal, in particular the alternating current induced back in the sensor coil (8), is evaluated,
**characterised in that**
means are furthermore provided by which distance changes between the generator coils (7) and the rail (4) arising due to the corrugations (9, 10) can be detected and evaluated.

5. An apparatus in accordance with claim 4,
**characterised in that**
the test apparatus (5) is rigidly connected to at least one axle (2) of a track vehicle and is carried by the axle or axles (2).

## Revendications

1. Procédé pour le contrôle de rails (4), en particulier de rails ferroviaires, quant à l'apparition d'une usure ondulatoire (9, 10), dans lequel
on exécute un contrôle par courants de Foucault, en faisant passer une bobine génératrice (7) pour un champ magnétique alternatif, et un capteur (8), en particulier une bobine de capteur, pour détecter un champ magnétique engendré dans le rail (4) par les courants de Foucault, en direction longitudinale au-dessus du rail (4), et le signal de capteur, en particulier le courant alternatif induit en retour dans la bobine de capteur (8) est analysé,
**caractérisé en ce que** l'on détecte et on analyse les modifications de distance, résultant des ondulations (9, 10), entre les bobines génératrices (7) et le rail (4).

2. Procédé selon la revendication 1,
**caractérisé en ce que** l'on utilise plusieurs paires de bobines génératrices (7) et de capteurs (8), agencées le long d'une corde (6), et la corde (6) est agencée parallèlement au rail (4) et déplacée le long du rail (4).

3. Procédé selon la revendication 1 ou 2,
**caractérisé en ce que** les bobines génératrices (7) sont calibrées à une distance prédéterminée du rail (4), par exemple à une distance d'environ 1 mm.

4. Appareil pour le contrôle de rails (4), en particulier de rails ferroviaires, quant à l'apparition d'une usure ondulatoire (9, 10), dans lequel
il est prévu des moyens (7, 8), à l'aide desquels il est possible de mener un contrôle par courants de Foucault, en faisant passer au moins une bobine génératrice (7) pour un champ magnétique alternatif, et au moins un capteur (8), en particulier une bobine de capteur, pour détecter un champ magnétique engendré dans le rail (4) par les courants de Foucault, en direction longitudinale au-dessus du rail (4), et le signal de capteur, en particulier le courant alternatif induit en retour dans la bobine de capteur (8), est analysé,
**caractérisé en ce qu'**il est prévu en outre des moyens grâce auxquels les modifications de distance, résultant des ondulations (9, 10), entre les bobines génératrices (7) et le rail (4), peuvent être détectées et analysées.

5. Appareil selon la revendication 4,
**caractérisé en ce que** le dispositif de contrôle (5) est relié rigidement avec au moins un essieu (2) d'un véhicule ferroviaire, ou est porté par l'essieu ou les essieux (2).
